# EUROPÄISCHE PATENTSCHRIFT

(11) **EP 3 762 212 B1**
(45) Veröffentlichungstag und Bekanntmachung des Hinweises auf die Patenterteilung: **27.04.2022**
(21) Anmeldenummer: 19710585.1
(22) Anmeldetag: 06.03.2019
(51) Int. Cl.: B29C 64/124, B29C 64/255, B33Y 30/00

(54) **3D-DRUCKER-EINWEG-PATRONE**
DISPOSABLE 3D PRINTER CARTRIDGE
CARTOUCHE À USAGE UNIQUE POUR IMPRIMANTE 3D

(30) Priorität: 07.03.2018 CH 2782018
(43) Veröffentlichungstag der Anmeldung: 13.01.2021
(73) Patentinhaber: Schmid, Marco, 9496 Balzers (LI); Schmid, Dieter, 9496 Balzers (LI)
(72) Erfinder: Schmid, Marco, 9496 Balzers (LI); Schmid, Dieter, 9496 Balzers (LI)
(74) Vertreter: Riederer Hasler & Partner Patentanwälte AG
(86) Internationale Anmeldenummer: PCT/CH2019/050003
(87) Internationale Veröffentlichungsnummer: WO 2019/169511

(56) Entgegenhaltungen:
- WO-A1-2016/062739
- WO-A2-2017/079774

## Beschreibung

Die Erfindung betrifft eine 3D-Drucker-Einweg-Patrone zum Einsetzen in eine Belichtungsvorrichtung zur Produktion eines in additiven Schichten aufgebauten Gegenstandes gemäss Oberbegriff des Anspruchs 1, ein System aus einer 3D-Drucker-Einweg-Patrone und einer Belichtungsvorrichtung sowie ein Verfahren zur Herstellung eines aus additiven Schichten bestehenden Gegenstandes gemäss Anspruch 14.

### Stand der Technik

Additive Fertigungsvorrichtungen (3D-Drucker) werden in immer mehr Branchen eingesetzt. Dies liegt daran, dass komplexe Formgebungen von Produkten im Vergleich zu anderen Fertigungsverfahren vereinfacht oder überhaupt erst ermöglicht werden. Auch im medizinischen Bereich werden additive Fertigungsvorrichtungen eingesetzt, um Gegenstände mit komplexen Formen herzustellen. Dazu zählen beispielsweise Zahnkronen, Implantate usw.

Muss der mit der additiven Fertigungsvorrichtung hergestellte Gegenstand hohe hygienische Anforderungen erfüllen, so ergeben sich Probleme, da die Fertigung in einem offenen Behälter erfolgt. Die zur Herstellung benötigten polymerisierbaren Flüssigkeiten werden aus Vorratsbehältern entnommen. Bei Verwendung von mehreren Flüssigkeiten werden diese offen gemischt. Sterile Bedingungen während der additiven Fertigung sind daher schwer oder gar nicht einzuhalten. Auch muss die additive Fertigungsvorrichtung nach jeder Benutzung genauestens gereinigt werden, um die hygienischen Anforderungen zu erfüllen.

Die Gegenstände werden aus polymerisierbaren Flüssigkeiten hergestellt. Die nicht aufgebrauchte polymerisierbare Flüssigkeit wird vielfach verworfen oder wieder verwendet. Aus ökonomischer und hygienischer Sicht ist diese Vorgehensweise jedoch von Nachteil.

In der WO 2017/079774 A2 ist eine Stereolithographie-Vorrichtung mit einer Trägereinrichtung, einer Strahlungsquelle sowie einer auf der Trägereinrichtung positionierbare und entnehmbare Kartuscheneinrichtung offenbart. Die Kartuscheneinrichtung weist einen von einer Hülle umschlossenen Innenraum auf, wobei die Hülle der Kartuscheneinrichtung verformbar und zumindest teilweise für die die Aushärtung auslösende Strahlung durchlässig ist. Der von der Hülle umschlossene Innenraum hat ein Volumen mit einem Aufnahmeraum, in dem fotosensitive Substanz für zumindest eine Zeitdauer eines Bestrahlungs- und Aushärtungsvorgangs enthalten und für die Strahlung zugänglich ist.

In der WO 2016/062739 A1 ist ein Halter gezeigt, welcher eine Tasse und eine Abdeckung umfasst, zwischen welchen das 3D-Objekt schichtweise aufgebaut werden kann. Das 3D-Objekt wird an einer zweiten Wand aufgebaut, welche durch ein flexibles Element relativ zu einer ersten Wand bewegbar ist. An der ersten Wand ist eine transparente Platte vorgesehen, durch welche Licht zum Aushärten der lichtsensitiven Flüssigkeit in den Halter eindringen kann.

### Aufgabe der Erfindung

Aus den Nachteilen des beschriebenen Stands der Technik resultiert die die vorliegende Erfindung initiierende Aufgabe eine additive Fertigung dahingehend zu verbessern, dass die Gegenstände unter verbesserten hygienischen und ökonomischen Bedingungen herstellbar sind und die polymerisierbare Flüssigkeit mit Genauigkeit ausgepresst werden kann. Noch ein Ziel ist es, Mehrkomponenten-Druckmaterialien mit einer kurzen Verarbeitungszeit zur Herstellung eines in Schichten aufgebauten Gegenstandes verarbeiten zu können.

### Beschreibung

Die 3D-Drucker-Einweg-Patrone zum Einsetzen in eine Belichtungsvorrichtung zur Produktion eines in additiven Schichten aufgebauten Gegenstandes umfasst:
- ein erstes unteres Gehäuseteil,
- ein zweites oberes Gehäuseteil, welches das erste Gehäuseteil verschliesst,
- eine Trägerplattform, welche die Unterseite des zweiten Gehäuseteils bildet, wobei an der Aussenseite der Trägerplattform der in additiven Schichten hergestellte Gegenstand während dessen Aufbau anordenbar ist und
- ein Aufbauelement, welches dem Boden des ersten Gehäuseteils entspricht, wobei an der inneren Seite des Aufbauelements die Schichten des Gegenstandes polymerisierbar sind und die innere Seite des Aufbauelements antihaftbeschichtet ist.

Die Patrone kann alle üblichen hygienischen Anforderungen erfüllen, welche an einen in additiven Schichten hergestellten Gegenstand gestellt sind. Dies ist insbesondere für medizinische Produkte von wesentlicher Bedeutung. Dazu zählen Implantate, Dentalprothesen oder Produkte der Chipindustrie, welche Reinraumklassen erreichen müssen. Alle medizinischen Vorgaben, welche Implantate betreffen, können erfüllt werden. Die Patrone beinhaltet alle wesentlichen Elemente, welche zur Herstellung des in additiven Schichten aufgebauten Gegenstandes bzw. des dreidimensionalen Objektes benötigt werden. Alle in der Patrone beinhalteten Elemente sind innerhalb der Patrone sauber verschlossen und ein Zugang ist erst bei Herstellung des Gegenstandes vorgesehen.

Die Lösung der Aufgabe gelingt bei der 3D-Drucker-Einweg-Patrone dadurch, dass zur Öffnung der Patrone zur Produktion des Gegenstandes das obere Gehäuseteil von dem unteren Gehäuseteil trennbar ist und dass das erste Gehäuseteil ein oben offener Behälter ist, in welchem das zweite Gehäuseteil aufgenommen ist. Erst durch Trennung des zweiten Gehäuseteils von dem ersten Gehäuseteils wird die Patrone geöffnet.

Durch Vorsehen des Aufbauelements innerhalb des ersten Gehäuseteils lässt sich der Gegenstand gut geschützt innerhalb der Patrone aufbauen. Das Aufbauelement kann aus den bei 3D-Druckern üblichen Materialien hergestellt sein. Das Aufbauelement umfasst bevorzugt eine Trennmembran aus einem Antihaftmaterial, von welchem sich die ausgehärteten auspolymerisierten Gegenstandsschichten leicht lösen lassen. Besonders bevorzugt ist es, wenn die Trennmembrane aus Perfluorethylenpropylen (FEP) besteht, da dieses Material bei vielen polymerisierbaren Harzen antihaftend wirkt. Bevorzugt sind die Harze durch Bestrahlung mit einer Lichtquelle, insbesondere mit einer UV-Lichtquelle, aushärtbar.

Alle Elemente des zweiten Gehäuseteils sind von dem ersten Gehäuseteil gut geschützt, während die Patrone gelagert wird und verschlossen ist. Selbst nach Öffnen der Patrone und während der Herstellung des Gegenstandes umgibt das erste Gehäuseteil das zweite Gehäuseteil und schützt den Gegenstand während der Herstellung vor Verunreinigungen und mechanischen Einflüssen.

In einer besonders bevorzugten Ausführungsform der Erfindung ist an dem zweiten Gehäuseteil eine Flüssigkeitskartusche ausgebildet, welche mit wenigstens einer polymerisierbaren Flüssigkeit gefüllt ist. Die Patrone ist fertig mit der benötigten Menge und Art der wenigstens einen polymerisierbaren Flüssigkeiten befüllt, welche wenigstens eine Flüssigkeit lange haltbar und gut geschützt in der Patrone gelagert sind. Es kann daher nur die Menge an Flüssigkeitsmischung aktiviert werden, welche zum Aufbau des Gegenstandes benötigt wird. Eine mehrfache unhygienische Verwendung der Patrone ist durch die limitierte Flüssigkeitsmenge verhindert.

In einer weiteren Ausführungsform der Erfindung ist an dem zweiten Gehäuseteil ein Einsetzraum vorgesehen, in welchen Einsatzraum eine Flüssigkeitskartusche einsetzbar ist. In den Einsetzraum kann eine externe Flüssigkeitskartusche eingesetzt werden. Die externe Flüssigkeitskartusche kann beispielsweise ein Blisterbag sein, welcher vor Gebrauch aufgestochen wird. Durch das Vorsehen des Einsetzraumes ist die Patrone für die unterschiedlichsten Flüssigkeiten geeignet und in ihrer Anwendung besonders flexibel.

Zweckmässigerweise weist die Flüssigkeitskartusche wenigstens einen ersten und einen zweiten Aufnahmeraum auf, in welche eine erste und eine zweite polymerisierbaren Flüssigkeit abgefüllt sind, wobei die unteren Enden der Aufnahmeräume in eine Mischkammer münden und die Trägerplattform von wenigstens einem mit der Mischkammer in Fluidverbindung stehenden Zulaufkanal unterbrochen ist, welcher Zulaufkanal in das erste untere Gehäuseteil mündet, wodurch das Flüssigkeitsgemisch in das untere Gehäuseteil überführbar ist. Diese Elemente der Flüssigkeitskartusche ermöglichen es, dass die Flüssigkeiten erst kurz vor ihrer Verarbeitung gemischt werden und in das untere Gehäuseteil fertig gemischt gedrückt werden. In dem unteren Gehäuseteil wird das Aufbauelement vollständig mit dem Flüssigkeitsgemisch bedeckt. Denkbar ist es, dass mehrere Zulaufkanäle vorgesehen sind. Dadurch könne die polymerisierbaren Flüssigkeiten je nach Anwendungsfall ungemischt oder partiell gemischt in das untere Gehäuse zwischen die Trägerplattform und das Aufbauelement übergeführt werden.

Zweckmässigerweise ist die Patrone einteilig ausgebildet und weist am Übergang vom ersten Gehäuseteil zum zweiten Gehäuseteil eine Sollbruchstelle auf. Die Patrone ist durch Aufbrechen der Sollbruchstelle ohne weitere Vorbereitung sofort einsatzbereit und die beiden Gehäuseteile lassen sich in die Belichtungsvorrichtung einsetzen.

Denkbar ist es auch, dass die die Patrone zweiteilig ausgebildet ist und das erste und das zweite Gehäuseteil lösbar miteinander verbunden sind. Die Verbindung ist zwar lösbar jedoch ausreichend abgedichtet, damit die Elemente der Patrone während der Lagerung gut geschützt sind.

In einer besonders bevorzugten Ausführungsform der Erfindung sind das erste und das zweite Gehäuseteil mit einem dehnbaren Verbindungselement im Bereich des Übergangs vom ersten Gehäuseteil zum zweiten Gehäuseteil verbunden. Durch das Verbindungselement bleibt der Innenraum zwischen dem ersten und dem zweiten Gehäuseteil auch dann von der Umgebung abgeschlossen, wenn die Patrone geöffnet wird und der Gegenstand in dem Innenraum hergestellt (gedruckt) wird. Das dehnbare Verbindungselement verbindet die beiden Gehäuseteile auch wenn diese während des Druckens auseinandergezogen werden. Bevorzugt handelt es sich bei dem Dehnbaren Verbindungselement um einen Faltenbalg, welcher an den zugewandten Rändern der beiden Gehäuseteilen befestigt ist. Während das zweite Gehäuseteil relativ zu dem ersten Gehäuseteil nach oben bewegt wird, lässt sich der Faltenbalg der Länge nach auseinanderziehen.

In einer weiteren bevorzugten Ausführungsform der Erfindung ist die Aussenseite des Bodens des ersten Gehäuseteils mit einer ersten abziehbaren Schutzabdeckung abgedeckt. Das Aufbauelement ist daher gut geschützt und wird zur Bestrahlung durch die Lichtquelle erst bei Bedarf frei gegeben.

Als vorteilhaft erweist es sich, wenn die Oberseite des zweiten Gehäuseteils mit einer zweiten abziehbaren Schutzabdeckung abgedeckt ist. Dadurch ist auch die Flüssigkeitskartusche insbesondere deren Stopfen bzw. der Einsetzraum vor Verunreinigungen und Beschädigungen geschützt, während die Patrone nicht eingesetzt wird.

Zweckmässigerweise weist die Flüssigkeitskartusche wenigstens einen Stopfen auf, welcher das Ausdrücken der Flüssigkeit ermöglicht und die Einfüllöffnung der Flüssigkeitskartusche verschliesst. Der Stopfen ermöglicht es, dass der Flüssigkeitsraum von oben verschlossen ist und die Flüssigkeit vollständig aus dem Flüssigkeitsraum entfernt werden kann.

Die Erfindung zeichnet sich auch bevorzugt dadurch aus, dass das erste Gehäuseteil ein erstes Halteelement aufweist, mit welchem es an der Belichtungsvorrichtung gehalten werden kann und welches erste Halteelement es ermöglicht, dass das Aufbauelement an der Belichtungsvorrichtung gespannt werden kann. Bevorzugt ist das erste Gehäuseteil mit dem ersten Halteelement formschlüssig verbunden. Beispielsweise ist das erste Haltelement ein Vorsprung, welcher in eine Nut der Belichtungsvorrichtung eingeschoben werden kann. Durch die Vorspannung des Aufbauelements wird das Aufbauelement relativ zu der Trägerplattform ausgerichtet bzw. justiert. Ausserdem ergibt sich durch die Vorspannung des Aufbauelements eine ebene Druckfläche und die ausgehärteten Schichten des Gegenstandes lassen sich leichter von dem Aufbauelement ablösen. Nach Gebrauch der Patrone lässt sich diese durch den Formschluss ohne Aufwand wieder aus der Belichtungsvorrichtung entfernen.

Von Vorteil ist es, wenn das zweite Gehäuseteil ein zweites Halteelement aufweist, mit welchem es an der Belichtungsvorrichtung gehalten werden kann. Mit dem zweiten Haltelement wird das zweite Gehäuseteil an einer Hubvorrichtung befestigt. Die Hubvorrichtung hebt das zweite Gehäuseteil relativ zum ersten Gehäuseteil während dem additiven Schichtenaufbau des Gegenstandes. Genauso wie das erste Gehäuseteil ist das zweite Gehäuseteil bevorzugt formschlüssig an der Hubvorrichtung gehalten. Dadurch ist das zweite Gehäuseteil rasch an der Hubvorrichtung befestigt und lässt sich genauso rasch wieder von der Hubvorrichtung lösen.

Ein weiterer Aspekt der Erfindung betrifft ein System aus einer 3D-Drucker-Einweg-Patrone gemäss obiger Beschreibung und einer Belichtungsvorrichtung, in welche das erste und das zweite Gehäuseteil einsetzbar sind, wobei der in additiven Schichten aufgebaute Gegenstand zwischen dem ersten und dem zweiten Gehäuseteil an der Trägerplattform herstellbar ist. Die wesentlichen Teile zur Herstellung des Gegenstandes sind daher in der Patrone beinhaltet. Die benötigte Lichtquelle zur Aushärtung der Schichten des Gegenstandes wird von der Belichtungsvorrichtung bereitgestellt. Die Belichtungsvorrichtung umfasst auch eine Hubvorrichtung mit welcher das obere Gehäuseteil relativ zum unteren Gehäuseteil angehoben werden kann. Auch umfasst die Belichtungsvorrichtung wenigstens einen Stössel mit dem die Flüssigkeit aus der Flüssigkeitskartusche in das untere Gehäuseteil ausgedrückt werden kann. Das System ermöglicht die hygienische Herstellung von in additiven Schichten aufgebauten Gegenständen, ohne dass die Belichtungsvorrichtung verschmutzt wird.

Noch ein Aspekt der Erfindung betrifft ein Verfahren zur Herstellung eines aus additiven Schichten bestehenden Gegenstandes, die folgenden Verfahrensschritte aufweisend:
- Öffnen einer 3D-Drucker-Einweg-Patrone gemäss obiger Beschreibung, indem das untere erste Gehäuseteil von dem zweiten oberen Gehäuseteil getrennt wird,
- Befestigen des ersten und des zweiten Gehäuseteils in der Belichtungsvorrichtung,
- Ausdrücken der wenigstens einen polymerisierbaren Flüssigkeit aus dem zweiten Gehäuseteil in das erste Gehäuseteil mithilfe von wenigstens einem an der Belichtungsvorrichtung vorgesehenen Stössel und
- stufenweiser Aufbau der additiven Schichten des Gegenstandes, indem der Abstand zwischen dem ersten und dem zweiten Gehäuseteil jeweils nach Aushärten einer Schicht durch Belichtung stufenweise vergrössert wird.

Das Verfahren ermöglicht es, dass der in additiven Schichten aufgebaute Gegenstand geschützt innerhalb der beiden Gehäuseteile hergestellt wird. Da die benötigten unter Lichtbestrahlung aushärtbaren Flüssigkeiten bereits in dem oberen Gehäuseteil abgefüllt sind, ist eine Kontaminierung des Gegenstandes durch Einfüllen der Flüssigkeiten oder andere zur Umgebung hin offene Verfahrensschritte sicher vermieden. Die Patrone ist dazu vorgesehen nur einmal verwendet zu werden, um den Gegenstand herzustellen. Nach Gebrauch ist die Patrone zu entsorgen. Eine Wiederverwendung der Patrone, welche ebenfalls zur Kontaminierung des Gegenstandes führt, ist daher verhindert.

In einer bevorzugten Ausführungsform der Erfindung erfolgt das Ausdrücken der wenigstens einen polymerisierbaren Flüssigkeit vollständig vor dem Aufbau des Gegenstandes oder erfolgt gleichzeitig und synchronisiert mit dem Aufbau der Schichten des Gegenstandes. In den meisten Fällen wird die wenigstens eine polymerisierbare Flüssigkeit zuerst in das als Behälter verwendete untere Gehäuseteil ausgedrückt. Bevorzugt ist die Menge an Flüssigkeit gerade ausreichend, um den Gegenstand aufbauen zu können. Wenn die gemischte Flüssigkeit jedoch eine kurze Verarbeitungszeit besitzt und unmittelbar nach Eintritt in das untere Gehäuseteil zu verarbeiten ist, ist es von Vorteil die Flüssigkeit "just in time" in das untere Gehäuseteil überzuführen. Das heisst die partielle Zufuhr an polymerisierbarer Flüssigkeit ist an das stufenweise Anheben des oberen Gehäuseteils relativ zu dem unteren Gehäuseteil geknüpft.

Weitere Vorteile und Merkmale ergeben sich aus der nachfolgenden Beschreibung zweier Ausführungsbeispiele der Erfindung unter Bezugnahme auf die schematischen Darstellungen. Es zeigen in nicht massstabsgetreuer Darstellung:
- Figur 1:: einen Längsschnitt durch eine erste Ausführungsform der erfinde-rischen 3D-Drucker-Einweg-Patrone;
- Figur 2:: einen Längsschnitt durch eine zweite Ausführungsform der erfin-derischen 3D-Drucker-Einweg-Patrone und
- Figur 3:: einen Längsschnitt durch die Patrone aus Figur 1 nach der Herstel-lung eines in additiven Schichten aufgebauten Gegenstandes.

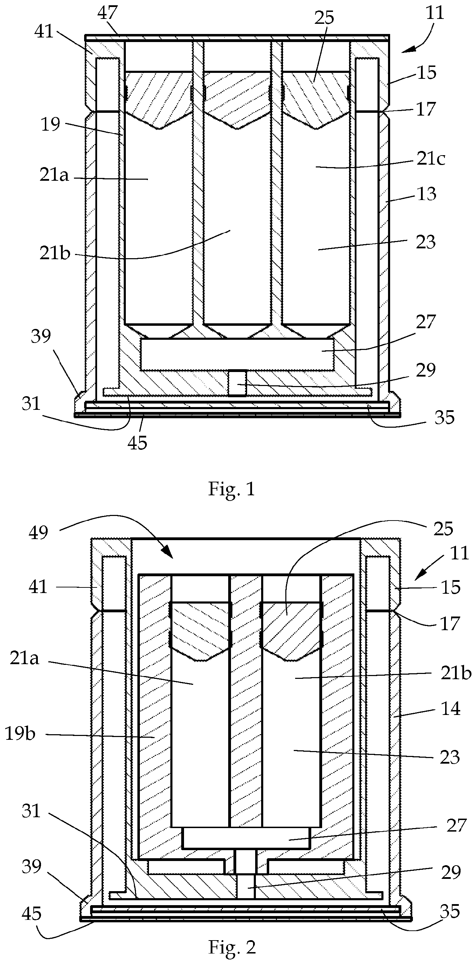

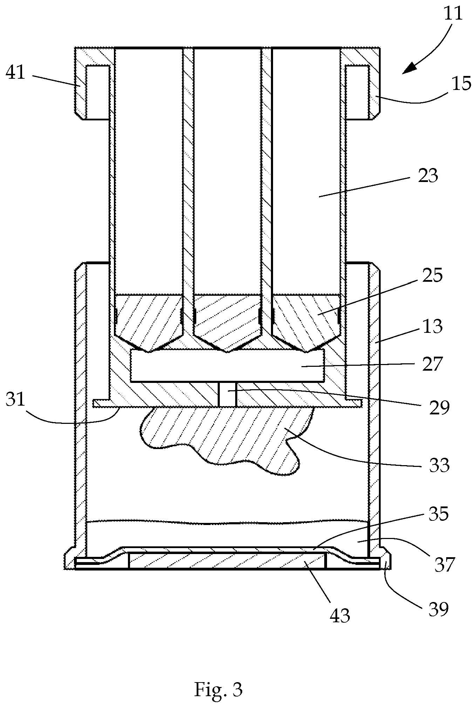

In den Figuren 1 und 3 ist eine erste Ausführungsform einer 3D-Drucker-Einweg-Patrone gezeigt, welche gesamthaft mit dem Bezugszeichen 11 bezeichnet ist.

Die Patrone 11 umfasst ein erstes unteres Gehäuseteil 13 und ein zweites oberes Gehäuseteil 15. Bevor die Patrone 11 in eine Belichtungsvorrichtung (in den Figuren nicht gezeigt) eingesetzt wird, sind die beiden Gehäuseteile 13 und 15 voneinander zu trennen. Die Patrone 11 ist bis zu ihrer Verwendung in der Belichtungsvorrichtung hermetisch abgeschlossen und ist daher insbesondere für den Einsatz unter sterilen Bedingungen geeignet.

Die beiden Gehäuseteile 13 und 15 sind an einer Sollbruchstelle 17 miteinander verbunden und lassen sich an dieser trennen, um die Patrone 11 gebrauchsfertig zu machen. Die Sollbruchstelle 17 lässt sich dadurch vorsehen, dass die Patrone 11 einstückig hergestellt ist. Bevorzugt wird die Patrone 11 im Spritzguss hergestellt. Sind das erste und das zweite Gehäuseteil 13 und 15 separat hergestellt, so werden sie lösbar miteinander verbunden, damit der Patroneninhalt abgedichtet ist. Wie die Figuren 1 und 2 zeigen ist das untere Gehäuseteil 13 ein oben offener Behälter, in welchem das obere Gehäuseteil 15 aufgenommen ist.

Gemäss der ersten Ausführungsform der Patrone (Figuren 1 und 3) ist an dem zweiten oberen Gehäuseteil 15 eine Flüssigkeitskartusche 19a ausgebildet. In den Figuren ist eine Ausführungsform der Flüssigkeitskartusche 19a gezeigt, bei welcher drei unterschiedliche unter Belichtung polymerisierbare Flüssigkeiten 21a,21b,21c in den Aufnahmeräumen 23 der Flüssigkeitskartusche 19a abgefüllt sind.

Durch Stopfen 25 lassen sich die Flüssigkeiten 21a,21b,21c in eine Mischkammer 27 drücken in welcher diese durch Mischen aktivierbar sind. In der Mischkammer 27 kann ein statischer Mischer vorgesehen sein, welcher die Flüssigkeiten 21 homogen mischt. Durch einen Zulaufkanal 29 können die Flüssigkeiten 21a,21b,21b in das untere Gehäuseteil 13 eintreten. Das untere Gehäuseteil 13 kann daher als eine Wanne für das aktivierte Flüssigkeitsgemisch dienen.

Die Unterseite des oberen Gehäuseteils 15 ist durch eine Trägerplattform 31 gebildet. An der Aussenseite der Trägerplattform 31, welche dem unteren Gehäuseteil 13 zugewandt ist, werden die Schichten des herzustellenden Gegenstandes 33 aufgebaut.

Der Boden des unteren Gehäuseteils 13 ist als ein Aufbauelement 35 ausgeführt, an welchem die Schichten des Gegenstandes 33 polymerisierbar sind. Das Aufbauelement 35 oder wenigstens dessen innere Seite, welche dem zweiten Gehäuseteil 15 zugewandt ist, ist antihaftbeschichtet. Dadurch lassen sich die durch Belichtung polymerisierten Schichten von dem Aufbauelement 35 ablösen, wenn die jeweilige Schicht ausgehärtet ist.

Als besonders vorteilhaft hat sich bei der Patrone 11 herausgestellt, dass diese sowohl die Trägerplattform 31 als auch das Aufbauelement 35 umfasst. Der Gegenstand 33 wird zwischen der Trägerplattform 31 und dem Aufbauelement in Schichten aufgebaut. Der Gegenstand wird daher innerhalb der Patrone 11 zwischen dem unteren Gehäuseteil 13 und dem oberen Gehäuseteil 15 nach dem sogenannten Bottom-Up-Verfahren hergestellt. Das heisst die aufzubauenden Objektschichten werden nicht an der Flüssigkeitsoberfläche (Harzoberfläche) sondern am Boden des unteren Gehäuseteils 13 aufgebaut. Da der Gegenstand aufgebaut wird, indem das obere Gehäuseteil 15 vom Boden des unteren Gehäuseteils 13 nach oben weg bewegt wird, ist es ausreichend, wenn eine geringe Menge gemischte Flüssigkeit (Harz) 37 in dem unteren Gehäuseteil 13 vorhanden ist. Der Boden bzw. das Aufbauelement 35 muss mit Harz bedeckt sein, damit das Harz zwischen Boden und Gegenstand 33 jederzeit nachfliesen kann, um eine Schicht aufzubauen. Die Lichtquelle ist unterhalb des Bodens angeordnet, weshalb der Boden bzw. das Aufbauelement 35 für das Licht durchgängig sein muss. Bevorzugt handelt es sich bei der Lichtquelle 35 um eine UV-Lichtquelle.

Damit sich während der Herstellung des Gegenstandes 33 das obere Gehäuseteil 15 von dem unteren Gehäuseteil 13 weg bewegen lässt, lassen sich beide Gehäuseteile 13,15 in der Belichtungsvorrichtung befestigen. Dazu sind ein erstes Halteelement 39 an dem ersten unteren Gehäuseteil 13 und ein zweites Haltelement 41 an dem zweiten oberen Gehäuseteil 41 ausgebildet.

Mit dem ersten Halteelement 39 lässt sich das untere Gehäuseteil 13 derart in der Belichtungsvorrichtung halten, dass das Aufbauelement 35 von der Lichtquelle 43 nach oben gedrückt wird und vorgespannt wird. Durch die Vorspannung des Aufbauelements 35 wird das Aufbauelement 35 relativ zu der Trägerplattform 31 ausgerichtet bzw. justiert. Die exakte Ausrichtung des Aufbauelements 35 ermöglicht es, dass der Gegenstand 33 mit sehr geringen Masstoleranzen herstellbar ist. Auch erleichtert die Vorspannung das Ablösen der jeweiligen ausgehärteten Schicht nach der LichtBestrahlung von dem Aufbauelement 35.

Das Aufbauelement 35 umfasst bevorzugt eine Trennmembran. Die Trennmembran ist aus einem Antihaftmaterial aufgebaut, von welchem sich die ausgehärteten auspolymerisierten Gegenstandsschichten leicht lösen. Besonders bevorzugt ist es, wenn die Trennmembrane aus Perfluorethylenpropylen (FEP) besteht, da dieses Material bei vielen Licht-aushärtbaren Harzen antihaftend wirkt.

Mit dem zweiten Haltelement 41 lässt sich das obere Gehäuseteil 15 an der Belichtungsvorrichtung befestigen. Die Belichtungsvorrichtung umfasst eine Hubvorrichtung, mit welcher das zweite Gehäuseteil 15 relativ zu dem ersten Gehäuseteil, bevorzugt stufenlos, angehoben werden kann und auch wieder abgesenkt werden kann. Jedes Mal, wenn eine Schicht des Gegenstandes 33 an der Lichtquelle durch Bestrahlung ausgehärtet worden ist, wird das obere Gehäuseteil 15 um die Dicke einer Schicht angehoben, nachdem der Gegenstand 33 von dem Aufbauelement 35 abgelöst wurde.

Die Belichtungsvorrichtung umfasst auch wenigstens einen Stössel, mit welchem der Stopfen 25 nach unten gedrückt werden kann, um die Flüssigkeit 21a,21b,21c aus dem Aufnahmeraum 23 in das untere Gehäuseteil 13 ausdrücken zu können.

Der Gegenstand lässt sich unter besonders hygienischen Bedingungen herstellen indem die Patrone 11 erst bei Herstellung des Gegenstandes 33 geöffnet wird, bereits mit der nötigen Menge an Flüssigkeiten 21a,21b,21c versetzt ist und der Gegenstand innerhalb der Patrone 11 hergestellt wird. Die Patrone 11 ist als Einweg-Patrone vorgesehen. Nach der Herstellung des Gegenstandes 33 und dessen Entnahme aus der Patrone 11, wird die Patrone 11 entsorgt.

Die beiden Gehäuseteile 13,15 sind an ihren offenen Seiten jeweils mit einer ersten bzw. mit einer zweiten abziehbaren Schutzabdeckung 45,47 versehen. Dadurch ist die Patrone 11 bis zu ihrem Gebrauch hermetisch abgeschlossen. Vor Gebrauch sind die erste und die zweite Schutzabdeckung 45,47 zu entfernen. Die erste Schutzabdeckung 45 schützt das Aufbauelement 35 und die zweite Schutzabdeckung 47 schützt die Flüssigkeitskartusche 19a bzw. die Stopfen 25, damit diese nicht ungewollt vor Gebrauch verschoben oder verunreinigt werden.

In der Figur 2 ist eine zweite Ausführungsform der Patrone 11 gezeigt, bei welcher eine Flüssigkeitskartusche 19b nicht Teil des zweiten Gehäuseteils 15 ist, sondern ein separates Teil ist, welches in einen an dem zweiten Gehäuseteil 15 vorgesehenen Einsetzraum 49 eingesetzt werden kann. Dadurch lässt sich die Patrone 11 gemäss dieser zweiten Ausführungsform mit Flüssigkeitskartuschen nutzen, welche separat erhältlich sind.

Das Herstellen des Gegenstandes 33 mit der Patrone 11 erfolgt in den folgenden Verfahrensschritten: Zuerst wird die Patrone 11 geöffnet, indem die Sollbruchstelle 17 durch Drehen des oberen Gehäuseteils 15 relativ zum unteren Gehäuseteil 13 aufgebrochen wird. Dadurch werden die beiden Gehäuseteile 13,15, welche zuvor hermetisch dicht verbunden waren, voneinander getrennt. Die erste und die zweite Schutzabdeckung 45,47 werden von den Gehäuseteilen 13,15 entfernt, damit die Patrone 11 einsatzbereit ist.

Beim Einsetzen der Patrone 11 in die Belichtungsvorrichtung bleibt das obere Gehäuseteil 15 weiterhin in dem unteren Gehäuseteil 13 aufgenommen und wird lediglich leicht angehoben. Die Trägerplattform 31 und das Aufbauelement 35 bleiben daher während dem Einsetzen der Patrone 11 weiterhin geschützt. Durch das Anheben lässt sich das obere Gehäuseteil 15 mit der Hubvorrichtung verbinden, indem das zweite Haltelement mit der Hubvorrichtung verbunden wird. Das unter Gehäuseteil 13 wird durch das erste Haltelement 39 mit der Belichtungsvorrichtung verbunden. Dabei wird das Aufbauelement 35 von der Lichtquelle 43 ausgerichtet.

Nun werden die Flüssigkeiten 21a,21b,21c (lichthärtbare Harze) aus der Flüssigkeitskartusche 19a oder 19b mit Stösseln in das untere Gehäuseteil 13 ausgedrückt. Die Stössel sind an der Belichtungsvorrichtung vorgesehen und lassen sich an die Anzahl der Aufnahmeräume 23 und den notwendigen Verschiebeweg der Stopfen 25 anpassen.

Wenn die gemischten Flüssigkeiten 37 das Aufbauelement 35 bedecken, wird mit dem additiven Aufbau der Schichten des Gegenstandes 33 begonnen. Nach Aushärten einer Schicht durch Bestrahlung mit der Lichtquelle 43 wird das obere Gehäuseteil 15 mit der Hubvorrichtung um eine Schichtdicke aus dem unteren Gehäuseteil 13 angehoben. Der Abstand zwischen den beiden Gehäuseteilen 13,15 wird daher während dem Aufbau des Gegenstandes vergrössert.

Denkbar ist es auch, dass die Flüssigkeitskartusche 19a oder 19b synchronisiert mit dem Schichtaufbau und nicht vor dem Schichtaufbau entleert wird. Dies kann dann Sinn machen, wenn die Flüssigkeiten nur sehr kurz vor der Verarbeitung gemischt werden sollen.

Die 3D-Drucker-Einweg-Patrone 11 weist einen sehr hohen hygienischen Standard auf, da sie erst kurz vor der Herstellung des Gegenstandes 33 geöffnet wird und zuvor hermetisch abgeschlossen ist. Zudem enthält sie nur die Menge an aushärtbaren Flüssigkeiten 21a,21b,21c, welche für die Herstellung des Gegenstandes 33 benötigt wird. Die Patrone 11 wird nach Herstellung des Gegenstandes 33 entsorgt, wodurch keine weitere Reinigung notwendig ist. Zur Herstellung des Gegenstandes 33 wird daher immer eine neue hygienisch einwandfreie Patrone 11 verwendet.

Legende:
- 11: 3D-Drucker-Einweg-Patrone
- 13: Erstes unteres Gehäuseteil
- 15: Zweites oberes Gehäuseteil
- 17: Sollbruchstelle
- 19a,19b: Flüssigkeitskartusche
- 21a,21b,21c: polymerisierbare Flüssigkeiten
- 23: Aufnahmeräume
- 25: Stopfen
- 27: Mischkammer
- 29: Zulaufkanal
- 31: Trägerplattform
- 33: In additiven Schichten aufgebauter Gegenstand
- 35: Aufbauelement
- 37: Gemischte Flüssigkeit
- 39: erstes Halteelement
- 41: zweites Halteelement
- 43: Lichtquelle
- 45: Erste Schutzabdeckung
- 47: Zweite Schutzabdeckung
- 49: Einsetzraum

## Patentansprüche

1. 3D-Drucker-Einweg-Patrone (11) zum Einsetzen in eine Belichtungsvorrichtung zur Produktion eines in additiven Schichten aufgebauten Gegenstandes (33), welche Patrone (11) wenigstens eine polymerisierbare Flüssigkeit (21a,21b,21c) enthält oder in welche Patrone (11) eine polymerisierbare Flüssigkeit einfüllbar ist, die Patrone (11) umfassend
- ein erstes unteres Gehäuseteil (13),
- ein zweites oberes Gehäuseteil (15), welches das erste Gehäuseteil (13) verschliesst,
- eine Trägerplattform (31), welche die Unterseite des zweiten Gehäuseteils (15) bildet, wobei an der Aussenseite der Trägerplattform der in additiven Schichten hergestellte Gegenstand (33) während dessen Aufbau anordenbar ist und
- ein Aufbauelement (35), welches dem Boden des ersten Gehäuseteils (13) entspricht, wobei an der inneren Seite des Aufbauelements (35) die Schichten des Gegenstandes (33) polymerisierbar sind und die innere Seite des Aufbauelements (35) antihaftbeschichtet ist,
**dadurch gekennzeichnet,**
**dass** zur Öffnung der Patrone zur Produktion des Gegenstandes (33) das obere Gehäuseteil (15) von dem unteren Gehäuseteil (13) trennbar ist und
**dass** das erste Gehäuseteil (13) ein oben offener Behälter ist, in welchem das zweite Gehäuseteil (15) aufgenommen ist.

2. Patrone nach Anspruch 1, **dadurch gekennzeichnet, dass** an dem zweiten Gehäuseteil (15) eine Flüssigkeitskartusche (19a) ausgebildet ist, welche mit der wenigstens einen polymerisierbaren Flüssigkeit (21a,21b,21c) gefüllt ist.

3. Patrone nach einem der Ansprüche 1 oder 2, **dadurch gekennzeichnet, dass** an dem zweiten Gehäuseteil (15) ein Einsetzraum (49) vorgesehen ist, in welchen Einsatzraum (49) eine Flüssigkeitskartusche (19b) einsetzbar ist.

4. Patrone nach einem der Ansprüche 2 oder 3, **dadurch gekennzeichnet, dass** die Flüssigkeitskartusche (19a) wenigstens einen ersten und einen zweiten Aufnahmeraum (23) aufweist, in welche eine erste und eine zweite polymerisierbaren Flüssigkeit (21a,21b) abgefüllt sind, wobei die unteren Enden der Aufnahmeräume in eine Mischkammer (27) münden und die Trägerplattform (31) von wenigstens einem mit der Mischkammer (27) in Fluidverbindung stehenden Zulaufkanal (29) unterbrochen ist, welcher Zulaufkanal (29) in das erste untere Gehäuseteil (13) mündet, wodurch das Flüssigkeitsgemisch (37) in das untere Gehäuseteil (15) überführbar ist.

5. Patrone nach einem der vorangehenden Ansprüche, **dadurch gekennzeichnet, dass** die Patrone (15) einteilig ausgebildet ist und am Übergang vom ersten Gehäuseteil (13) zum zweiten Gehäuseteil (15) eine Sollbruchstelle (17) aufweist.

6. Patrone nach einem der Ansprüche 1 bis 4, **dadurch gekennzeichnet, dass** die Patrone (11) zweiteilig ausgebildet ist und das erste und das zweite Gehäuseteil (13,15) lösbar miteinander verbunden sind.

7. Patrone nach einem der vorangehenden Ansprüche, **dadurch gekennzeichnet, dass** das erste und das zweite Gehäuseteil (13,15) mit einem dehnbaren Verbindungselement im Bereich des Übergangs vom ersten Gehäuseteil (13) zum zweiten Gehäuseteil (15) verbunden sind.

8. Patrone nach einem der vorangehenden Ansprüche, **dadurch gekennzeichnet, dass** die Aussenseite des Bodens des ersten Gehäuseteils (13) mit einer ersten abziehbaren Schutzabdeckung (45) abgedeckt ist.

9. Patrone nach einem der vorangehenden Ansprüche, **dadurch gekennzeichnet, dass** die Oberseite des zweiten Gehäuseteils (15) mit einer zweiten abziehbaren Schutzabdeckung(47) abgedeckt ist.

10. Patrone nach einem der vorangehenden Ansprüche, **dadurch gekennzeichnet, dass** die Flüssigkeitskartusche (19a,19b) wenigstens einen Stopfen (25) aufweist, welcher das Ausdrücken der Flüssigkeit (21a,21b21c) ermöglicht und die Einfüllöffnung der Flüssigkeitskartusche (19a,19b) verschliesst.

11. Patrone nach einem der vorangehenden Ansprüche, **dadurch gekennzeichnet, dass** das erste Gehäuseteil (13) ein erstes Halteelement (39) aufweist, mit welchem es an der Belichtungsvorrichtung gehalten werden kann und welches erste Halteelement (39) es ermöglicht, dass das Aufbauelement (35) an der Belichtungsvorrichtung gespannt werden kann.

12. Patrone nach einem der vorangehenden Ansprüche, **dadurch gekennzeichnet, dass** das zweite Gehäuseteil (15) ein zweites Halteelement (41) aufweist, mit welchem es an der Belichtungsvorrichtung gehalten werden kann.

13. System aus einer 3D-Drucker-Einweg-Patrone (11) gemäss einem der vorangehenden Ansprüche und einer Belichtungsvorrichtung, in welche das erste und das zweite Gehäuseteil (13,15) einsetzbar sind, wobei der in additiven Schichten aufgebaute Gegenstand (33) zwischen dem ersten und dem zweiten Gehäuseteil (13,15) an der Trägerplattform (31) herstellbar ist.

14. Verfahren zur Herstellung eines aus additiven Schichten bestehenden Gegenstandes (33), die folgenden Verfahrensschritte aufweisend:
- Öffnen einer 3D-Drucker-Einweg-Patrone (11) gemäss einem der Patentansprüche 1 bis 12, indem das untere erste Gehäuseteil (13) von dem zweiten oberen Gehäuseteil (15) getrennt wird,
- Befestigen des ersten und des zweiten Gehäuseteils (13,15) in der Belichtungsvorrichtung,
- Ausdrücken der wenigstens einen polymerisierbaren Flüssigkeit (21a,21b,21c) aus dem zweiten Gehäuseteil (15) in das erste Gehäuseteil (13) mithilfe von wenigstens einem an der Belichtungsvorrichtung vorgesehenen Stössel und
- stufenweiser Aufbau der additiven Schichten des Gegenstandes (33), indem der Abstand zwischen dem ersten und dem zweiten Gehäuseteil (13,15) jeweils nach Aushärten einer Schicht durch Belichtung stufenweise vergrössert wird.

15. Verfahren nach Anspruch 14, **dadurch gekennzeichnet, dass** das Ausdrücken der wenigstens einen polymerisierbaren Flüssigkeit (21a,21b,21c) vollständig vor dem Aufbau des Gegenstandes (33) erfolgt oder synchronisiert während des Aufbaus der Schichten des Gegenstandes (33) erfolgt.

## Claims

1. 3D printer disposable cartridge (11) for inserting into an exposure device for producing an object (33) built-up in additive layers, which cartridge (11) contains at least one polymerizable liquid (21a, 21b, 21c) or cartridge (11) in which a polymerizable liquid can be filled, the cartridge (11) comprising
- a first lower casing part (13),
- a second upper casing part (15) which closes the first casing part (13),
- a carrier platform (31) that forms the lower side of the second casing part (15), wherein the object (33) produced in additive layers can be placed during the building up thereof on the outer side of the carrier platform and
- a structural element (35) that corresponds to the bottom of the first casing part (13), wherein the layers of the object (33) are polymerizable on the inner side of the structural element (35) and the inner side of the structural element (35) has a non-stick coating,
**characterized in**
**that** the upper casing part (15) can be separated from the lower casing part (13) for opening the cartridge for producing the object (33) and that the first casing part (13) is a container that is open at the top in which the second casing part (15) is received.

2. Cartridge according to claim 1, **characterized in that** a liquid cartridge (19a) that is filled with the at least one polymerizable liquid (21a, 21b, 21c) is configured on the second casing part (15).

3. Cartridge according to one of the claims 1 or 2, **characterized in that** a insertion space (49) is provided on the second casing part (15), insertion space (49) into which a liquid cartridge (19b) can be placed.

4. Cartridge according to one of the claims 2 or 3, **characterized in that** the liquid cartridge (19a) has at least a first and a second receiving space (23) in which a first and a second polymerizable liquid (21a, 21b) are filled, wherein the lower ends of the receiving spaces join into a mixing chamber (27) and the carrier platform (31) is interrupted by at least one feed channel (29) that is in fluid communication with the mixing chamber (27), which feed channel (29) joins into the first lower casing part (13) so that the liquid mixture (37) can be transferred into the lower casing part (15).

5. Cartridge according to one of the preceding claims, **characterized in that** the cartridge (15) is made of one part and has a predetermined breaking point (17) at the transition from the first casing part (13) to the second casing part (15).

6. Cartridge according to one of the claims 1 to 4, **characterized in that** the cartridge (11) is made of two parts, and the first and the second casing part (13, 15) are removably connected with each other.

7. Cartridge according to one of the preceding claims, **characterized in that** the first and the second casing part (13, 15) are connected with an expandable connecting element in the area of the transition from the first casing part (13) to the second casing part (15).

8. Cartridge according to one of the preceding claims, **characterized in that** the outer side of the bottom of the first casing part (13) is covered with a first removable protective cover (45).

9. Cartridge according to one of the preceding claims, **characterized in that** the upper side of the second casing part (15) is covered with a second removable protective cover (47).

10. Cartridge according to one of the preceding claims, **characterized in that** the fluid cartridge (19a, 19b) has at least one plug (35) that makes possible to squeeze the liquid (21a, 21b, 21c) and closes the filling opening of the liquid cartridge (19a, 19b).

11. Cartridge according to one of the preceding claims, **characterized in that** the first casing part (13) has a first retaining element (39) with which it can be held on the exposure device and which first retaining element (39) makes possible to clamp the structural element (35) on the exposure device.

12. Cartridge according to one of the preceding claims, **characterized in that** the second casing part (15) has a second retaining element (41) with which it can be held on the exposure device.

13. System of a 3D printer disposable cartridge (11) according to one of the preceding claims and an exposure device into which the first and the second casing part (13, 15) can be inserted, wherein the object (33) built-up in additive layers can be produced on a carrier platform (31) between the first and the second casing part (13, 15).

14. Method for producing an object (33) consisting of additive layers that comprises the following method steps:
- opening of a 3D printer disposable cartridge (11) according to one of the claims 1 to 12, the lower first casing part (13) being separated from the second upper casing part (15),
- fixing of the first and of the second casing part (13, 15) in the exposure device,
- squeezing of the at least one polymerizable liquid (21a, 21b, 21c) out of the second casing part (15) into the first casing part (13) by means of at least one stem provided on the exposure device and
- gradual structuration of the additive layers of the object (33), the distance between the first and the second casing part (13, 15) being gradually increased after hardening of each respective layer by exposure.

15. Method according to claim 14, **characterized in that** the squeezing of the at least one polymerizable liquid (21a, 21b, 21c) completely takes place before the structuration of the object (33) or synchronously during the structuration of the layers of the object (33).

## Revendications

1. Cartouche à usage unique pour imprimante 3D (11) à mettre en place dans un appareil d'exposition pour la production d'un objet (33) structuré en couches additives, laquelle cartouche (11) contient au moins un liquide polymérisable (21a, 21b, 21c) ou cartouche (11) dans laquelle un liquide polymérisable peut être rempli, la cartouche (11) comprenant :
- une première partie inférieure de bâti (13),
- une seconde partie supérieure de bâti (15) qui ferme la première partie de bâti (13),
- une plateforme de support (31) qui forme la face inférieure de la seconde partie de bâti (15), l'objet (33) fabriqué en couches additives pouvant être placé pendant sa constitution sur la face extérieure de la plateforme de support et
- un élément structurel (35) qui correspond au fond de la première partie de bâti (13), les couches de l'objet (33) pouvant être polymérisées sur la face intérieure de l'élément structurel (35) et la face intérieure de l'élément structurel (35) étant équipée d'un revêtement antiadhésif,
**caractérisée en ce**
**que** la partie supérieure de bâti (15) peut être séparée de la partie inférieure de bâti (13) pour l'ouverture de la cartouche pour la production de l'objet (33) et que la première partie de bâti (13) est un récipient ouvert vers le haut dans lequel la seconde partie de bâti (15) est logée.

2. Cartouche selon la revendication 1, **caractérisée en ce qu'**une cartouche de liquide (19a), qui est remplie du au moins un liquide polymérisable (21a, 21b, 21c), est configurée sur la seconde partie de bâti (15).

3. Cartouche selon l'une des revendications 1 ou 2, **caractérisée en ce qu'**il est prévu un espace d'insertion (49) sur la seconde partie de bâti (15), espace d'insertion (49) dans lequel une cartouche de liquide (19b) peut être insérée.

4. Cartouche selon l'une des revendications 2 ou 3, **caractérisée en ce que** la cartouche de liquide (19a) présente au moins un premier et un second espace de logement (23) dans lesquels un premier et un second liquide polymérisable (21a, 21b) sont remplis, cependant que les extrémités inférieures des espaces de logement débouchent dans une chambre de mélange (27) et la plateforme de support (31) est interrompue par au moins un conduit d'arrivée (29) qui est en communication fluidique avec la chambre de mélange (27), lequel conduit d'arrivée (29) débouche dans la première partie inférieure de bâti (13) si bien que le mélange de liquide (37) peut être transféré à la partie inférieure de bâti (15).

5. Cartouche selon l'une des revendications précédentes, **caractérisée en ce que** la cartouche (15) est configurée en une partie et présente un endroit destiné à la rupture (17) à la transition de la première partie de bâti (13) à la seconde partie de bâti (15).

6. Cartouche selon l'une des revendications 1 à 4, **caractérisée en ce que** la cartouche (11) est configurée en deux parties et la première et la seconde partie de bâti (13, 15) sont reliées de manière détachable l'une à l'autre.

7. Cartouche selon l'une des revendications précédentes, **caractérisée en ce que** la première et la seconde partie de bâti (13, 15) sont reliées à un élément de liaison extensible dans la zone de la transition de la première partie de bâti (13) à la seconde partie de bâti (15).

8. Cartouche selon l'une des revendications précédentes, **caractérisée en ce que** la face extérieure du fond de la première partie de bâti (13) est recouverte avec un premier recouvrement de protection (45) qui peut être retiré.

9. Cartouche selon l'une des revendications précédentes, **caractérisée en ce que** la face supérieure de la seconde partie de bâti (15) est recouverte avec un second recouvrement de protection (47) qui peut être retiré.

10. Cartouche selon l'une des revendications précédentes, **caractérisée en ce que** la cartouche de liquide (19a, 19b) présente au moins un bouchon (25) qui permet d'exprimer le liquide (21a, 21b, 21c) et qui ferme l'ouverture de remplissage de la cartouche de liquide (19a, 19b).

11. Cartouche selon l'une des revendications précédentes, **caractérisée en ce que** la première partie de bâti (13) présente un premier élément de retenue (39) avec lequel elle peut être maintenue sur l'appareil d'exposition, premier élément de retenue (39) qui permet de pouvoir serrer l'élément structurel (35) sur l'appareil d'exposition.

12. Cartouche selon l'une des revendications précédentes, **caractérisée en ce que** la seconde partie de bâti (15) présente un second élément de retenue (41) avec lequel elle peut être serrée sur l'appareil d'exposition.

13. Système composé par une cartouche à usage unique pour imprimante 3D (11) selon l'une des revendications précédentes et un appareil d'exposition dans lequel la première et la seconde partie de bâti (13, 15) peuvent être insérées, cependant que l'objet (33) structuré en couches additives peut être fabriqué sur la plateforme de support (31) entre la première et la seconde partie de bâti (13, 15).

14. Procédé pour la fabrication d'un objet (33) composé de couches additives présentant les étapes de procédé suivantes :
- ouverture d'une cartouche à usage unique pour imprimante 3D (11) selon l'une des revendications 1 à 12, la première partie inférieure de bâti (13) étant séparée de la seconde partie supérieure de bâti (15),
- fixation de la première et de la seconde partie de bâti (13, 15) dans l'appareil d'exposition,
- expression du au moins un liquide polymérisable (21a, 21b, 21c) de la seconde partie de bâti (15) dans la première partie de bâti (13) à l'aide d'au moins un piston prévu sur l'appareil d'exposition et
- structuration par étapes des couches additives de l'objet (33), l'écart entre la première et la seconde partie de bâti (13, 15) étant agrandi progressivement respectivement après durcissement d'une couche par exposition.

15. Procédé selon la revendication 14, **caractérisé en ce que** l'expression du au moins un liquide polymérisable (21a, 21b, 21c) est effectuée entièrement avant la constitution de l'objet (33) ou de manière synchronisée pendant la constitution de l'objet (33).
